(19) Europäisches Patentamt

European Patent Office

Office européen des brevets

(11) **EP 4 300 375 A1**

(12) **EUROPEAN PATENT APPLICATION**

(43) Date of publication:
03.01.2024 Bulletin 2024/01

(21) Application number: 22182150.7

(22) Date of filing: 30.06.2022

(51) International Patent Classification (IPC):
*G06N 5/02* (2023.01)      *G06F 16/24* (2019.01)
*G06F 16/25* (2019.01)     *G06F 16/84* (2019.01)

(52) Cooperative Patent Classification (CPC):
**G06F 16/84; G06F 16/24; G06F 16/252;**
**G06N 3/042; G06N 3/044; G06N 3/045;**
**G06N 3/048; G06N 3/08; G06N 3/082; G06N 3/084;**
**G06N 5/02; G06N 5/022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Buckley, Mark**
**81829 München (DE)**
• **Hasan, Rakebul**
**81737 München (DE)**
• **Ringsquandl, Martin**
**83064 Raubling (DE)**

(74) Representative: **Siemens Patent Attorneys**
**Postfach 22 16 34**
**80506 München (DE)**

(54) **METHOD AND SYSTEM FOR INFORMATION RETRIEVAL**

(57)      Method and system for information retrieval

A database stores a collection of spreadsheet documents (CSD) describing an industrial system. The aim of the method is to create a digital twin of the industrial system on demand and on-the-fly in order to answer a given query. To this end, the spreadsheet documents are processed by a spreadsheet pre-processor (SPP) and a table encoder (TE). The query is processed by a graph pre-processor (GPP) and a graph encoder (GE). A table retriever (TR) computes a relevance score for each table that is proportional to a probability that the table is relevant to answer the query. Focusing on the most relevant tables, a cell retriever (CR) retrieves for each cell a relevance score that is proportional to a probability that the cell is relevant to answer the query. Finally, a user interface outputs the cell with the highest relevance score as an answer to the query. In other words, the method first retrieves relevant spreadsheet documents for a given query and then retrieves matching cells. As a result, a novel neural retrieval model and end-to-end training procedure are provided that allow to retrieve relevant information from spreadsheet documents with on-demand queries. Users do not have to manually look for relevant documents from which information should be extracted. This saves substantial experts' time. The neural retrieval model can be trained with respect to any standard schema depending on the domain of the industry (eClass for automation, Bricks for building technology, ISO-95).

FIG 4

EP 4 300 375 A1

**Description**

The digitalization of data in industry, i.e., building so-called "digital twins" of machines, products, and processes is a major challenge. One of the main problems is that relevant information is stored in disparate data sources using different or no schemas at all. Due to lack of tool-support engineers often simply maintain spreadsheets. This leads not only to unaligned schemas, but also introduces a great variety in vocabulary, since every engineer has his own way of describing technical concepts.

On the other hand, there exist standardized industrial vocabularies and schemas such as ISO-15926 or eClass. These schemas can be represented in form of a multi-graph, where classes and entities are nodes which are connected through named relationships.

Typically, such spreadsheets are roughly organized in tabular form, where each row represents an entity (machine, product, process, etc.), and each column represents some property of that entity.

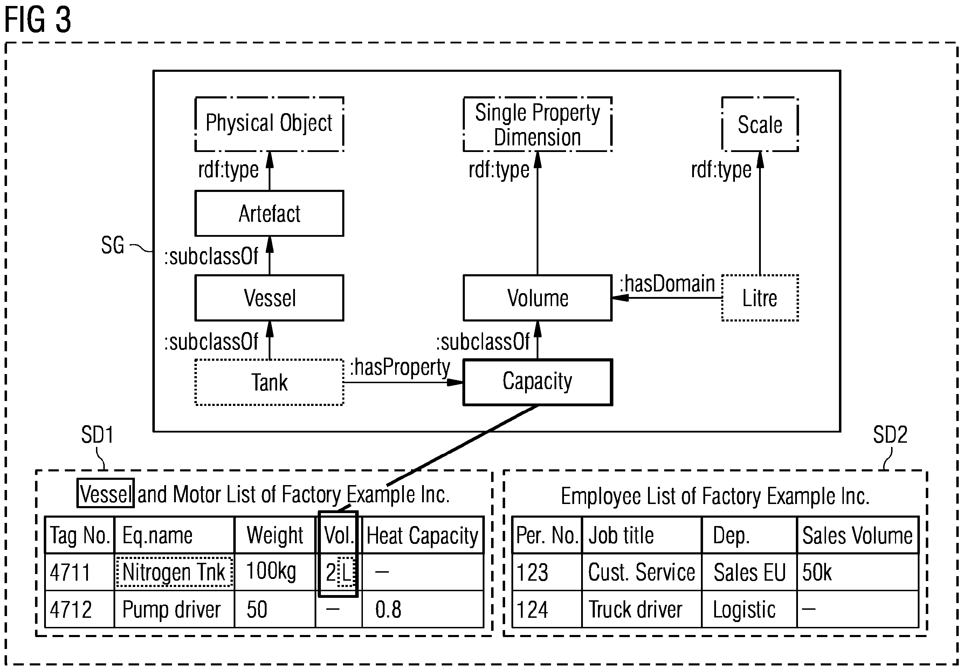

Fig. 3 shows an example of simple machine spreadsheets, a first spreadsheet document SD1 and a second spreadsheet document SD2, each containing a free-text title describing a table below. The column names can also be any free text describing the content of that column. These descriptions and names depend on the individual taste of the engineer and their semantics are hard to interpret even for other engineers. Abbreviations like "Vol." and misspellings "Tnk" instead of "Tank" make information extraction difficult. Additionally, the disambiguation of technical properties "Capacity" as a kind of volume versus "Heat Capacity" as a temperature coefficient is necessary when interpreting the tables.

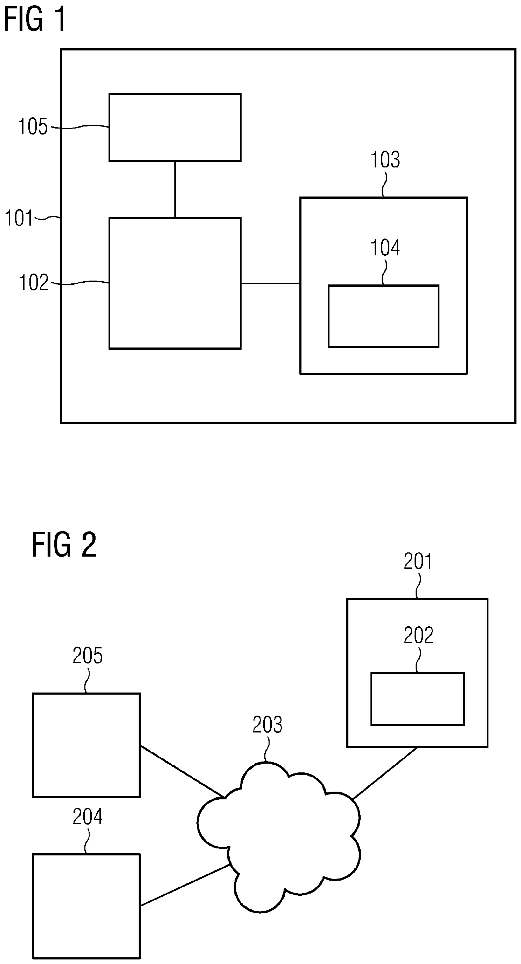

While the first spreadsheet document SD1 is relevant for a schema graph SG taken from ISO-15926-14 and shown in Fig. 1, the second spreadsheet document SD2 is not.

Since it is usually unclear which spreadsheet documents contain what kind of information, the first step of selecting relevant documents is already a challenge. Processing large amounts of irrelevant documents may lead to many falsely extracted facts.

This is shown in Fig. 3 in the second spreadsheet document SD2. An employee sheet may also have columns that incorrectly match to the standard vocabulary. In this case "Sales Volume" should be ignored since the whole table is irrelevant for the digital twin creation.

In industry, according to the state of the art data engineers manually align semi- or unstructured data sources to a standardized target schema. The data engineers build Extract, Transform, Load (ETL) pipelines without knowing the domain, which leads to long communication loops between data engineers and domain experts.

There are some Information Extraction systems available for general-purpose Named Entity Recognition (NER) and Relation Extraction - with state-of-the-art transformer architectures (BERT, Roberta, ...). However, the types of entities are not relevant for industry, e.g. Person, Company, or Currency. Domain adaptation of such transformer models is very expensive and requires substantial amounts of training data.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for information retrieval, the following operations are performed by components, wherein the components are software components executed by one or more processors and/or hardware components:

- providing, by a database, a collection of spreadsheet documents, with each spreadsheet document containing a table with a header row and body rows, wherein each body row contains body cells and corresponds to an entity, wherein each column of the table corresponds to a property of the respective entities, and wherein the header row contains header cells naming the respective properties,
- transforming, by a spreadsheet pre-processor, each table into a numerical tensor representation by outputting a sequence of cell tokens for each header cell and each body cell,
- encoding, by a table encoder, the sequences of cell tokens into header cell embeddings and body cell embeddings,
- transforming, by a graph pre-processor, a query graph representing a query into node token sequences and a numerical adjacency tensor,
- encoding, by a graph encoder, the node token sequences and the numerical adjacency tensor into a query graph embedding,
- computing, by a table retriever, a relevance score for each table that is proportional to a probability that the table is relevant to answer the query, and selecting tables with the highest relevance scores,
- retrieving, by a cell retriever, for each cell of the tables with the highest relevance scores a relevance score that is proportional to a probability that the cell is relevant to answer the query, and
- outputting, by a user interface, the cell with the highest relevance score as an answer to the query.

The system for information retrieval comprises the following components, wherein the components are software components executed by one or more processors and/or hardware components:

- a database, storing a collection of spreadsheet documents, with each spreadsheet document containing a table with a header row and body rows, wherein each body row contains body cells and corresponds to an entity, wherein each column of the table corresponds to a property of the respective entities, and wherein the header row contains header cells naming the respective properties,
- a spreadsheet pre-processor, configured for transforming each table into a numerical tensor representation by outputting a sequence of cell tokens for each header cell and each body cell,
- a table encoder, configured for encoding the sequences of cell tokens into header cell embeddings and body cell embeddings,
- a graph pre-processor, configured for transforming a query graph representing a query into node token sequences and a numerical adjacency tensor,
- a graph encoder, configured for encoding the node token sequences and the numerical adjacency tensor into a query graph embedding,
- a table retriever, configured for computing a relevance score for each table that is proportional to a probability that the table is relevant to answer the query, and selecting tables with the highest relevance scores,
- a cell retriever, configured for retrieving for each cell of the tables with the highest relevance scores a relevance score that is proportional to a probability that the cell is relevant to answer the query, and
- a user interface, configured for outputting the cell with the highest relevance score as an answer to the query.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

The method and system, or at least some of their embodiments, phrase the task of extracting relationships between entities (facts) from spreadsheets according to schema graphs as a neural information retrieval model that first retrieves relevant spreadsheet documents for a given query and then retrieves matching cells.

The method and system, or at least some of their embodiments, provide a novel neural retrieval model and end-to-end training procedure that allows to retrieve relevant information from spreadsheet documents with on-demand queries.

The method and system, or at least some of their embodiments, retrieve information according to standardized schemas such as ISO-15926.

Users do not have to manually look for relevant documents from which information should be extracted. This saves substantial experts' time.

The neural retrieval model can be trained with respect to any standard schema depending on the domain of the industry (eClass for automation, Bricks for building technology, ISO-95) .

An embodiment of the method comprises the initial operations of outputting, by the user interface, a schema graph with nodes and edges, with the nodes representing the entities and classes, and with each edge representing a relationship between one of the entities and one of the classes and a relationship type, and detecting, by the user interface, a user interaction that selects the query graph as a subgraph from the schema graph.

In another embodiment of the method, the final outputting operation outputs a ranked list of cells with the highest relevance scores.

In an embodiment of the method and system, the table retriever processes the header cell embeddings, the body cell embeddings, and the query graph embedding as input, and the cell retriever processes the header cell embeddings, and the body cell embeddings from the tables with the highest relevance scores, as well as the query graph embedding as input.

In another embodiment of the method and system, each table contains a title and the spreadsheet pre-processor outputs a sequence of cell tokens for the title, which the table encoder encodes into a context embedding, which the table retriever and/or the cell retriever process as input.

In another embodiment of the method and system, the table encoder uses shared token embeddings that are also used by the graph encoder.

In another embodiment of the method and system, the table encoder contains a token encoder producing a single latent representation for each sequence of cell tokens, wherein the token encoder is a neural network, in particular a LSTM or a transformer model, and a table transformer, in particular implemented with a TaBERT transformer architecture or a TURL transformer architecture with multi-head self-attention.

In another embodiment of the method and system, the graph encoder contains a graph neural network, in particular a graph convolutional network or a graph attention network, and a pooling mechanism.

In another embodiment of the method and system, the table retriever and/or the cell retriever is a decoder network.

In another embodiment of the method and system, the entities are entities of an industrial system, in particular of an industrial automation system.

The computer program product has program instructions for carrying out the method.

The provision device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,
Fig. 2    shows another embodiment,
Fig. 3    shows a schema graph SG and its matching to a first spreadsheet document SD1,
Fig. 4    shows an overall system architecture of a neural retrieval model NRM,
Fig. 5    shows the operation of a spreadsheet pre-processor SPP,
Fig. 6    shows the operation of a table encoder TE,
Fig. 7    shows the operation of a graph encoder GE,
Fig. 8    shows the operation of a table retriever TR,
Fig. 9    shows the operation of a cell retriever CR,
Fig. 10   shows artificial training data generation,
Fig. 11   shows a closed-loop use case for the method and system, and
Fig. 12   shows a flowchart of a possible exemplary embodiment of a method for information retrieval.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

Fig. 1 shows one sample structure for computer-implementation of the invention which comprises:

(101)    computer system
(102)    processor
(103)    memory
(104)    computer program (product)
(105)    user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201)    provisioning device
(202)    computer program (product)
(203)    computer network / Internet
(204)    computer system
(205)    mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

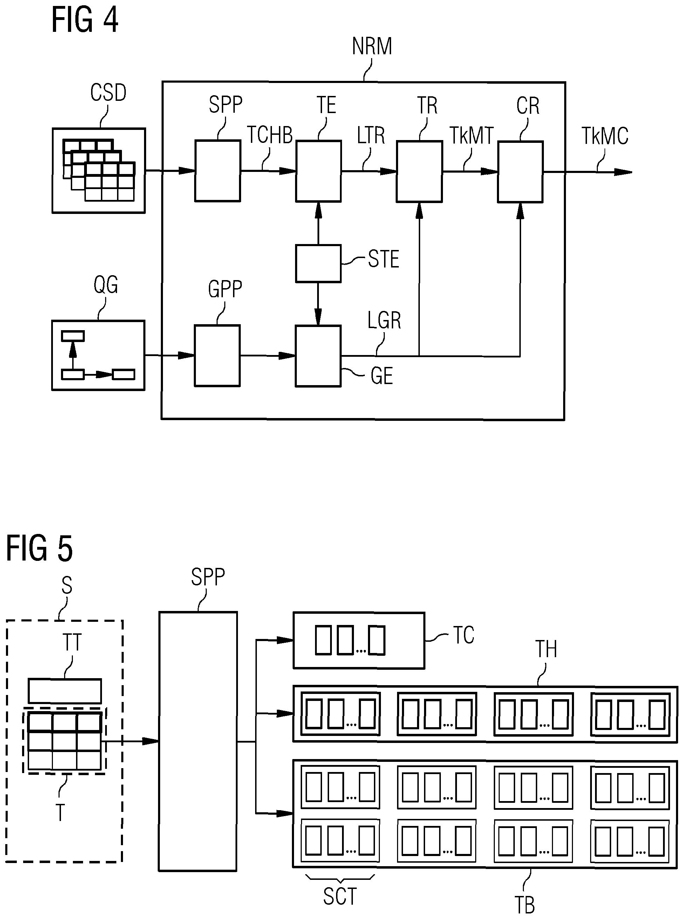

Preferably, the embodiments shown in Figs. 4 to 12 can be implemented with a structure as shown in Fig. 1 or Fig. 2.

Digital twin creation from semi- or unstructured sources can be phrased as an information extraction problem, e.g., relation extraction from tabular data. Such a system should extract as much structured information as possible, which can then be queried by a user.

For example, to build or enrich a digital twin, it would be desirable to automatically extract entities, their properties, and relationships according to a standardized schema from the semi-structured contents of spreadsheets.

The embodiments described in the following start directly with the query phase, where a user gives a structured query $Q$ and the system should return the best matching cells $P(cell \,|Q)$ in a collection of spreadsheet documents. Therefore, the digital twin is created "on-demand" in an information retrieval setting.

We assume that the tabular data are entity tables, where each row corresponds to an entity and each column is a property of that entity.

The data source of the system is a collection of spreadsheet documents $D = \{T_i\}$, and each spreadsheets represents an entity table $T_i = (C,H,B)$ as a triple. The table context $C = (w_1,w_2,...w_t)$ is a sequence of words (e.g., the sheet title, a name or a description). The table header $H = \{h_1,h_2,...,h_m\}$ is a set of $m$ header cells. The table body $B = \{b_{1,1},b_{1,2},..,b_{n,m}\}$ is the set of table body cells having $n$ rows and m columns. Each body cell $b_{i,j} = (w_1,w_2,...,w_t)$ and header cell $h_i = (w_1,w_2,...,w_t)$ is also a sequence of words.

Further a schema graph is defined as a multi-graph $G = (V,E)$, where $V$ is the node set (classes and entities) and $E \subset R \times V \times V$ is the edge set (relationships between entities and classes) with the set of all relationship types $R$. A query graph $Q$ is defined a subgraph of $G$.

Label scarcity problem

The problem of machine learning models for information retrieval is that it is extremely costly to get human expert labels since this requires that a domain expert needs to be familiar with the spreadsheet contents as well as the target schema.

The following embodiments specify different approaches on how to artificially generate training data for the information retrieval task.

Each of the following embodiments refers to one or both of the following technical features:

a) A neural information retrieval model, and
b) an end-to-end training procedure.

Each of these technical features is described in more detail below.

Neural Information Retrieval

Component Architecture

Fig. 4 shows an overall system architecture of a neural retrieval model NRM.

Inputs to the (trained) neural retrieval model NRM are a collection of spreadsheet documents CSD and a query graph QG (given from a user). The output of the neural retrieval model NRM are top-k matching cells TkMC, which are presented as a ranked top-k list of matching spreadsheet cells.

The internal components of the neural retrieval model NRM will be described in more detail with regard to Figs. 5 - 11. Among the internal components are a spreadsheet pre-processor SPP, receiving the collection of spreadsheet documents CSD and outputting for each document a tokenized context, header, and body TCHB to a table encoder TE.

The table encoder TE also receives shared token embedding STE and outputs latent table representations LTR to a table retriever TR, which outputs top-k matching tables TkMT to a cell retriever CR, which outputs the top-k matching cells TkMC.

Among the internal components of the neural retrieval model NRM are also a graph pre-processor GPP feeding into a graph encoder GE, which also receives the shared token embeddings STE. The graph encoder GE feeds a latent graph representation LGR, which is a graph embedding of the query graph QG, to the table retriever TR and to the cell retriever CR. In the following figures and embodiments, the latent graph representation LGR is termed query graph embedding QGE.

Spreadsheet Preprocessing

Before tables contained in the collection of spreadsheet documents CSD can be encoded they need to be transformed into a numerical tensor representation.

Fig. 5 shows the operation of the spreadsheet pre-processor SPP, receiving as input a spreadsheet document S containing a title TT and a table T.

The spreadsheet pre-processor SPP outputs a sequence of cell tokens SCT for each cell in the table T. It also separates a table header TH containing header cells for each column from a table body TB containing body cells of the table T, as well as a table context TC that is based on the title TT.

Tokenization of each cell and the title TT can be done in different ways, either on character-, word- or word-piece (token) level.

Table Encoder

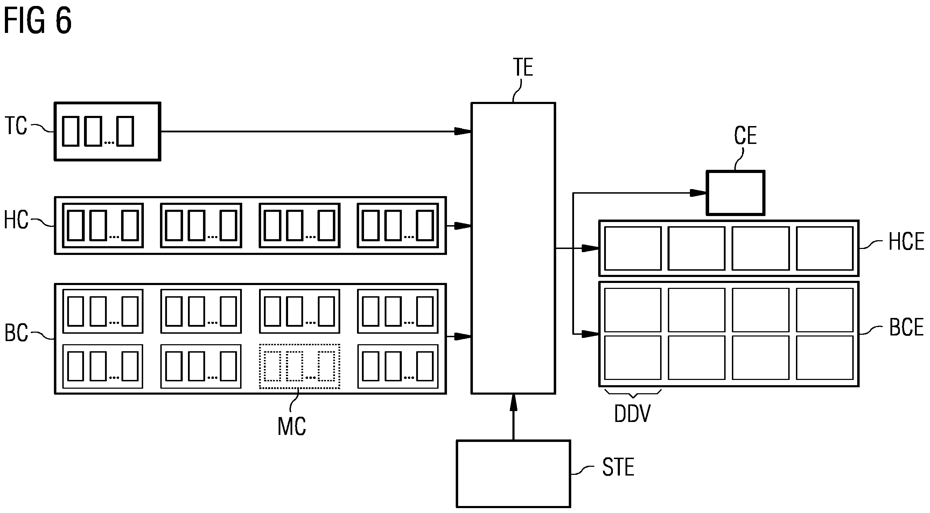

The operation of the table encoder TE is shown in Figure 6. The first step in the table encoder TE is to feed the sequences of cell tokens SCT of the header cells HC and the body cells BC into a token encoder. The token encoder is a neural network that produces a single latent representation for each sequence of cell tokens SCT. For example, LSTMs or transformer models could be used here.

The latent representation of the sequence of cell tokens SCT is now the cell representation. A latent representation is also computed for the table context TC by the token encoder.

The latent representations of the header cells HC, the body cells BC, and the table context TC are then processed by multiple layers of a table transformer (e.g., a TaBERT or TURL transformer architecture) with a multi-head self-attention that allows cell embeddings to pass neural messages. The table transformer is also part of the table encoder TE. The table transformer computes and outputs a context embedding CE representing the table context TC, header cell embeddings HCE representing the header cells HC, and body cell embeddings BCE representing the body cells BC.

Yin P., Neubig G., Yih W., Riedel S., TABERT: Pretraining for Joint Understanding of Textual and Tabular Data, ACL 2020, discloses the TaBERT transformer architecture. The entire contents of that document are incorporated herein by reference.

Deng et al., TURL: table understanding through representation learning, VLDB 2020, discloses the TURL transformer architecture. The entire contents of that document are incorporated herein by reference.

As shown in Fig. 6, a self-supervised masked-cell pretraining (masking a masked cell MC from the table encoder TE during training) is also possible for domain adaptation. However, this is not required.

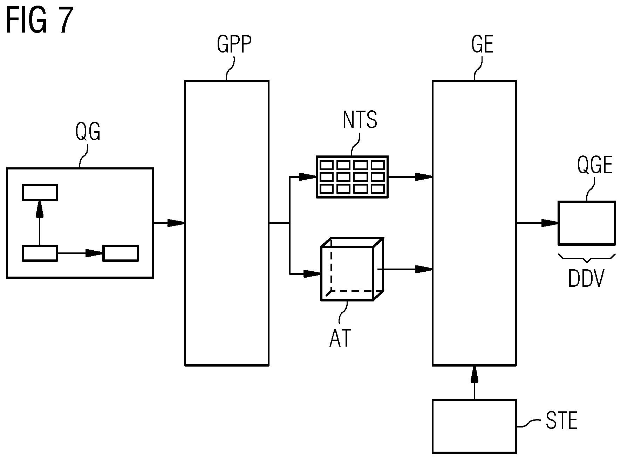

The token encoder contained in the table encoder TE also receives shared token embeddings STE, which will be explained with regard to Fig. 7.

Graph Encoder

Fig. 7 shows the operation of the graph encoder GE.

Before the query graph QG can be fed to the graph encoder GE it is pre-processed by a graph pre-processor GPP. Similar to the operation of the spreadsheet pre-processor and table encoder, the text in each graph node is tokenized into a sequence of tokens, resulting in node token sequences NTS. The relations between nodes are transformed into a numerical adjacency tensor AT.

These two inputs are then fed into the graph encoder GE. The graph encoder GE can be implemented with any graph neural network (GNN) architecture, such as Graph Convolutional Network (GCN), Graph Attention Network, etc. The token embeddings of the graph encoder GE are shared with the table encoder TE as shared token embeddings STE to make matching more efficient (require less training data). To get a single graph embedding a pooling operation is needed, e.g., max-pooling or a more advanced parameterized pooling operation can be used here. The final output is a query graph embedding QGE consisting of a d-dimensional vector DDV, which is a latent representation of the query graph QG.

Table Retriever

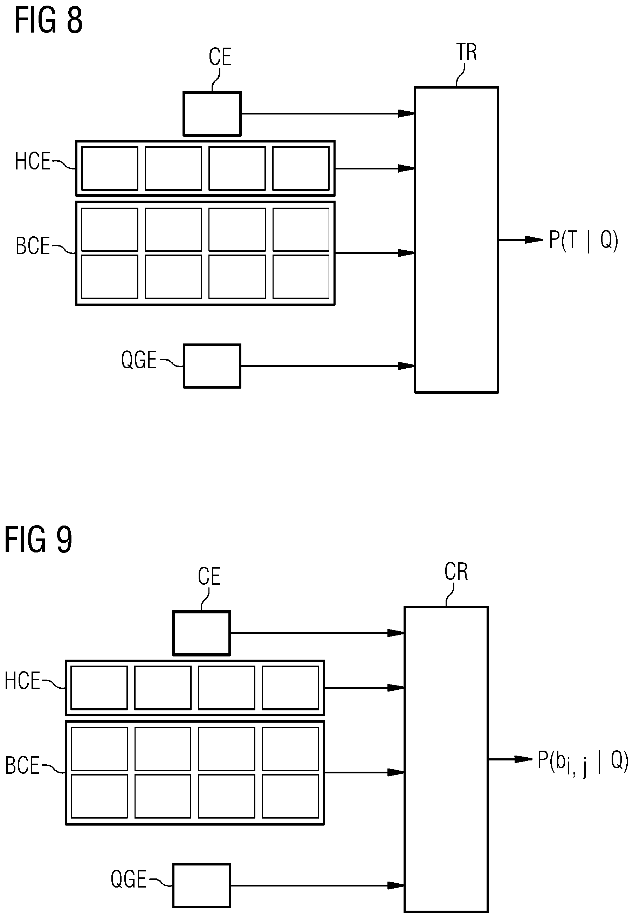

Fig. 8 shows the operation of the table retriever TR.
The table retriever TR is a decoder network that takes the context embedding CE, the header cell embeddings HCE, the body cell embeddings BCE, and the query graph embedding QGE as input and outputs a score $P(T|Q)$ that is proportional to the probability that the given table is relevant to answer the given query. The table retriever TR can be a simple feed-forward network that pools context embedding CE, the header cell embeddings HCE, and the body cell embeddings BCE into a single pooled table embedding. The output is then the dot-product of the table embedding and the query graph embedding QGE, followed by a sigmoid layer.

$$P(T|Q) \sim \sigma(\boldsymbol{t}^\top \boldsymbol{q})$$

where $t$ is the pooled table embedding, and $q$ is the query graph embedding QGE. Based on the output of the table retriever, top-k relevant tables TkMT are selected.

Cell retriever

Fig. 9 shows the operation of the cell retriever CR as a second decoder.
The cell retriever CR is similar to the table retriever but operates on a body cell embedding level. It takes the top-k relevant tables TkMT and scores all body cells with the given query. More specifically, the cell retriever uses as input the query graph embedding QGE on the one hand and the context embedding CE, the header cell embeddings HCE, and the body cell embeddings BCE for the top-k relevant tables TkMT on the other hand.
The output $P(b_{i,j}|Q)$ of the cell retriever CR is then proportional to the probability that a body cell is relevant for the given query.

$$P\left(b_{i,j}\middle|Q\right) \sim \sigma(\boldsymbol{b}_{i,j}^\top \boldsymbol{q})$$

where $b_{i,j}$ is the body cell embedding BCE in the i-th row and j-th column. Based on the output of the cell retriever, top-k relevant cells TkMC are selected.

End-to-end Training Procedure

Artificial training data generation

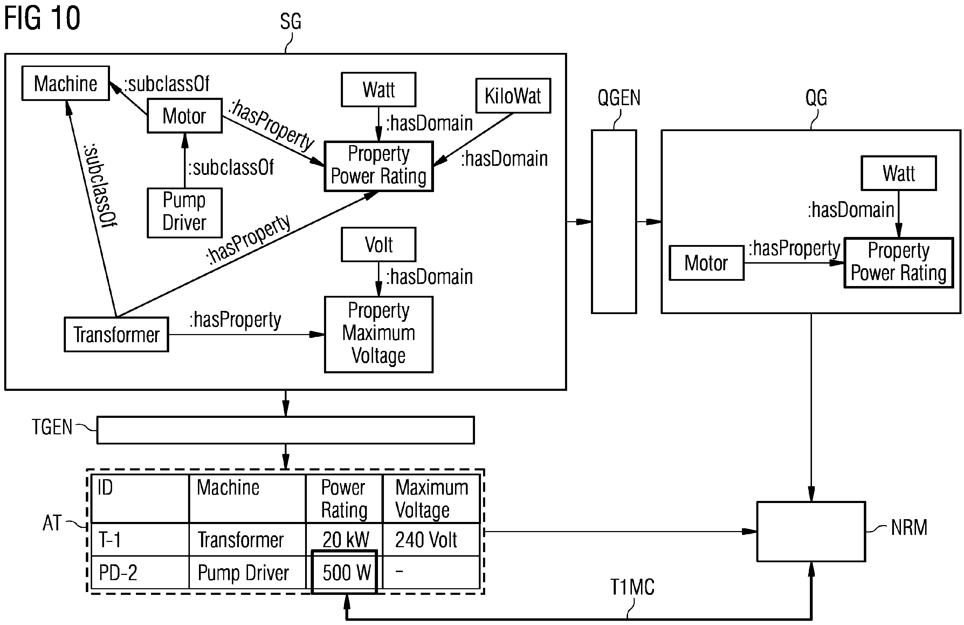

Fig. 10 shows artificial training data generation, wherein a subgraph of a schema graph SG leads to a query graph QG and an artificial table AT.
As mentioned above, labeled training data is very expensive to obtain and usually does not exist in companies today. Hence, for the task of cell retrieval, artificial tables are generated by a table generator TGEN with the following procedure:

1. A property node and its surrounding neighborhood nodes in the schema graph SG are sampled (marked with a thick line in Fig. 10).

2. A table generator TGEN assigns every property node in the neighborhood to a column in the artificial table AT.

3. The table generator TGEN assigns every class node (e.g., Machine) to a column in the artificial table AT.

4. The table generator TGEN turns instances of the class nodes into rows in the artificial table AT.

5. The table generator TGEN samples cell values for properties from a range of numerical values (optionally with unit of measure) or strings.

6. To make the system more robust, spellings of column names may be perturbed with noise by the table generator TGEN.

A query generator QGEN generates a query graph QG from the sampled property node in step 1 and its surrounding neighborhood nodes in the schema graph SG.

This procedure leads to training data $D_{train} = \{(Q_1,(T_1,\{b_{1,k}\}), Q_2,(T_2,\{b_{2,k}\})\}$ with query $Q_i$, relevant table $T_i$ and list of relevant body cells $b_k$.

Any supervised information retrieval training procedure can be used to fit the neural retrieval model NRM. For example, standard discriminative training using a cross-entropy-loss and negative sampling:

$$loss = \sum_{Q_i, b_{i,k} \in D_{train}} \log P(b_{i,k}|Q_i) + \log(1 - P(\tilde{b}_{i,k}|Q_i))$$

where $\tilde{b}_{i,k}$ is a negative sample, i.e. an irrelevant body cell.

The neural retrieval model NRM is trained to retrieve a top-1 matching cell T1MC in the artificial table AT.

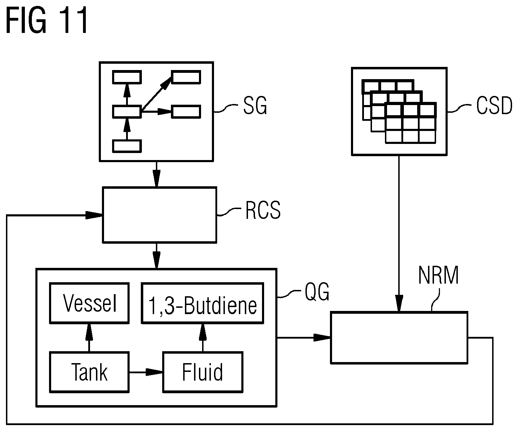

Fig. 11 shows an application of the neural retrieval model NRM in a closed-loop use case for automatically documenting compliance & regulation procedures. Here, the neural retrieval model NRM is used in a closed-loop fashion, where no human is involved. For example, compliance and regulation procedures in chemical plants often need to document which materials are processed and if the machines are certified for such processing. A regulation compliance system RCS automatically creates a query represented by a query graph QG for a specific machine with hazardous substances (e.g., the carcinogen 1,3-Butdiene) according to a standardized schema represented by a schema graph SG. The neural retrieval model NRM accesses a collection of spreadsheet documents CSD as described above. The documents/cells that are retrieved by the neural retrieval model NRM are then saved for eventual compliance checks.

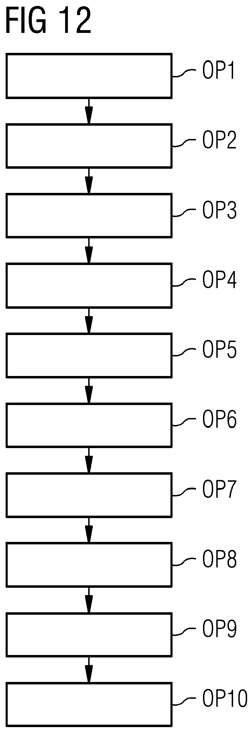

Fig. 12 shows a flowchart of a possible exemplary embodiment of a method for information retrieval.

In a providing operation OP3, a database provides a collection of spreadsheet documents, with each spreadsheet document containing a table with a header row and body rows, wherein each body row contains body cells and corresponds to an entity, wherein each column of the table corresponds to a property of the respective entities, and wherein the header row contains header cells naming the respective properties.

In a transforming operation OP4, a spreadsheet pre-processor transforms each table into a numerical tensor representation by outputting a sequence of cell tokens for each header cell and each body cell.

In an encoding operation OP5, a table encoder encodes the sequences of cell tokens into header cell embeddings and body cell embeddings.

In a transforming operation OP6, a graph pre-processor transforms a query graph representing a query into node token sequences and a numerical adjacency tensor.

In an encoding operation OP7, a graph encoder encodes the node token sequences and the numerical adjacency tensor into a query graph embedding.

In a computing operation OP8, a table retriever computes a relevance score for each table that is proportional to a probability that the table is relevant to answer the query, and selects tables with the highest relevance scores.

In a retrieving operation OP9, a cell retriever retrieves for each cell of the tables with the highest relevance scores a relevance score that is proportional to a probability that the cell is relevant to answer the query.

In a final outputting operation OP10, a user interface outputs the cell with the highest relevance score as an answer to the query.

In a possible variant of this embodiment, the user interface outputs a schema graph with nodes and edges in an initial outputting operation OP1, with the nodes representing the entities and classes, and with each edge representing a relationship between one of the entities and one of the classes and a relationship type.

The user interface then performs a detecting operation OP2, detecting a user interaction that selects the query graph as a subgraph from the schema graph.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for information retrieval, wherein the following operations are performed by components, and wherein the components are software components executed by one or more processors and/or hardware components:

   - providing (OP3), by a database, a collection of spreadsheet documents (CSD), with each spreadsheet document containing a table (T) with a header row and body rows, wherein each body row contains body cells (BC) and corresponds to an entity, wherein each column of the table (T) corresponds to a property of the respective entities, and wherein the header row contains header cells (HC) naming the respective properties,
   - transforming (OP4), by a spreadsheet pre-processor (SPP), each table (T) into a numerical tensor representation by outputting a sequence of cell tokens (SCT) for each header cell (HC) and each body cell (BC),
   - encoding (OP5), by a table encoder (TE), the sequences of cell tokens (SCT) into header cell embeddings (HCE) and body cell embeddings (BCE),
   - transforming (OP6), by a graph pre-processor (GPP), a query graph (QG) representing a query into node token sequences (NTS) and a numerical adjacency tensor (AT),
   - encoding (OP7), by a graph encoder (GE), the node token sequences (NTS) and the numerical adjacency tensor (AT) into a query graph embedding (QGE),
   - computing (OP8), by a table retriever (TR), a relevance score for each table (T) that is proportional to a probability that the table (T) is relevant to answer the query, and selecting tables with the highest relevance scores (TkMT),
   - retrieving (OP9), by a cell retriever (CR), for each cell of the tables with the highest relevance scores (TkMT) a relevance score that is proportional to a probability that the cell is relevant to answer the query, and
   - outputting (OP10), by a user interface, the cell with the highest relevance score as an answer to the query.

2. The method according to claim 1, with the initial operations of

   - outputting (OP1), by the user interface, a schema graph (SG) with nodes and edges, with the nodes representing the entities and classes, and with each edge representing a relationship between one of the entities and one of the classes and a relationship type, and
   - detecting (OP2), by the user interface, a user interaction that selects the query graph (QG) as a subgraph from the schema graph (SG).

3. The method according to any of the preceding claims,

   - wherein the final outputting operation (OP10) outputs a ranked list of cells with the highest relevance scores.

4. The method according to any of the preceding claims,

   - wherein the table retriever (TR) processes the header cell embeddings (HCE), the body cell embeddings (BCE), and the query graph embedding (QGE) as input, and
   - wherein the cell retriever (CR) processes the header cell embeddings (HCE), and the body cell embeddings (BCE) from the tables with the highest relevance scores (TkMT), as well as the query graph embedding (QGE) as input.

5. The method according to claim 4,

   - wherein each table (T) contains a title (TT) and the spreadsheet pre-processor (SPP) outputs a sequence of cell tokens (SCT) for the title (TT), which the table encoder (TE) encodes into a context embedding (CE), which the table retriever (TR) and/or the cell retriever (CR) process as input.

**6.** The method according to any of the preceding claims,

- wherein the table encoder (TE) uses shared token embeddings (STE) that are also used by the graph encoder (GE).

**7.** The method according to any of the preceding claims, wherein the table encoder (TE) contains

- a token encoder producing a single latent representation for each sequence of cell tokens (SCT), wherein the token encoder is a neural network, in particular a LSTM or a transformer model, and
- a table transformer, in particular implemented with a TaBERT transformer architecture or a TURL transformer architecture with multi-head self-attention.

**8.** The method according to any of the preceding claims, wherein the graph encoder (GE) contains

- a graph neural network, in particular a graph convolutional network or a graph attention network, and
- a pooling mechanism.

**9.** The method according to any of the preceding claims,

- wherein the table retriever (TR) and/or the cell retriever (CR) is a decoder network.

**10.** The method according to any of the preceding claims,

- wherein the entities are entities of an industrial system, in particular of an industrial automation system.

**11.** A system for information retrieval, comprising:

- a database, storing a collection of spreadsheet documents (CSD), with each spreadsheet document containing a table (T) with a header row and body rows, wherein each body row contains body cells (BC) and corresponds to an entity, wherein each column of the table (T) corresponds to a property of the respective entities, and wherein the header row contains header cells (HC) naming the respective properties,
- a spreadsheet pre-processor (SPP), configured for transforming (OP4) each table (T) into a numerical tensor representation by outputting a sequence of cell tokens (SCT) for each header cell (HC) and each body cell (BC),
- a table encoder (TE), configured for encoding (OP5) the sequences of cell tokens (SCT) into header cell embeddings (HCE) and body cell embeddings (BCE),
- a graph pre-processor (GPP), configured for transforming (OP6) a query graph (QG) representing a query into node token sequences (NTS) and a numerical adjacency tensor (AT),
- a graph encoder (GE), configured for encoding (OP7) the node token sequences (NTS) and the numerical adjacency tensor (AT) into a query graph embedding (QGE),
- a table retriever (TR), configured for computing (OP8) a relevance score for each table (T) that is proportional to a probability that the table (T) is relevant to answer the query, and selecting tables with the highest relevance scores (TkMT),
- a cell retriever (CR), configured for retrieving (OP9) for each cell of the tables with the highest relevance scores (TkMT) a relevance score that is proportional to a probability that the cell is relevant to answer the query, and
- a user interface, configured for outputting (OP10) the cell with the highest relevance score as an answer to the query.

**12.** Computer program product with program instructions for carrying out a method according to one of the method claims.

**13.** Provision device for the computer program product according to the preceding claim, wherein the provision device stores and/or provides the computer program product.

## FIG 1

## FIG 2

# FIG 3

Physical Object — rdf:type ← Artefact

SG

Artefact — :subclassOf ← Vessel

Vessel — :subclassOf ← Tank

Single Property Dimension — rdf:type ← Volume

Volume — :hasDomain ← Litre

Scale — rdf:type ← Litre

Volume — :subclassOf ← Capacity

Tank — :hasProperty → Capacity

SD1

**Vessel and Motor List of Factory Example Inc.**

| Tag No. | Eq.name | Weight | Vol. | Heat Capacity |
|---------|--------------|--------|------|---------------|
| 4711 | Nitrogen Tnk | 100kg | 2 L | — |
| 4712 | Pump driver | 50 | — | 0.8 |

SD2

**Employee List of Factory Example Inc.**

| Per. No. | Job title | Dep. | Sales Volume |
|----------|--------------|-----------|--------------|
| 123 | Cust. Service | Sales EU | 50k |
| 124 | Truck driver | Logistic | — |

EP 4 300 375 A1

12

FIG 4

NRM

CSD

SPP    TCHB    TE    LTR    TR    TkMT    CR    TkMC

STE

QG

GPP    LGR

GE

FIG 5

S

SPP

TT

TC    TH

T

SCT    TB

# FIG 6

EP 4 300 375 A1

# FIG 7

## FIG 8

CE

TR

HCE

BCE

QGE

P(T | Q)

## FIG 9

CE

CR

HCE

BCE

QGE

$P(b_{i,j} | Q)$

FIG 10

# FIG 11

## FIG 12

```
┌─────────────────┐
│                 │── OP1
└─────────────────┘
         │
         ▼
┌─────────────────┐
│                 │── OP2
└─────────────────┘
         │
         ▼
┌─────────────────┐
│                 │── OP3
└─────────────────┘
         │
         ▼
┌─────────────────┐
│                 │── OP4
└─────────────────┘
         │
         ▼
┌─────────────────┐
│                 │── OP5
└─────────────────┘
         │
         ▼
┌─────────────────┐
│                 │── OP6
└─────────────────┘
         │
         ▼
┌─────────────────┐
│                 │── OP7
└─────────────────┘
         │
         ▼
┌─────────────────┐
│                 │── OP8
└─────────────────┘
         │
         ▼
┌─────────────────┐
│                 │── OP9
└─────────────────┘
         │
         ▼
┌─────────────────┐
│                 │── OP10
└─────────────────┘
```

Europäisches
Patentamt
European
Patent Office
Office européen
des brevets

# EUROPEAN SEARCH REPORT

Application Number

EP 22 18 2150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TRABELSI MOHAMED ET AL: "Relational Graph Embeddings for Table Retrieval", 2020 IEEE INTERNATIONAL CONFERENCE ON BIG DATA (BIG DATA), IEEE, 10 December 2020 (2020-12-10), pages 3005-3014, XP033889429, DOI: 10.1109/BIGDATA50022.2020.9378239 [retrieved on 2021-03-12] * abstract * * section "II. Related Work / A. Knowledge graph embeddings" * * section "II. Related Work / B. Word embedding for tables" * * section "IV KG Embedding for Table Retrieval" * | 1-13 | INV. G06N5/02 G06F16/24 G06F16/25 G06F16/84 |
| A | RICHARD SOCHER ET AL: "Reasoning with neural tensor networks for knowledge base completion", PROCEEDINGS OF THE 27TH ANNUAL CONFERENCE ON NEURAL INFORMATION PROCESSING SYSTEMS (NIPS'26), 5 December 2013 (2013-12-05), pages 926-935, XP055235569, ISBN: 978-1-63266-024-4 * abstract * | 1-13 | |

TECHNICAL FIELDS
SEARCHED      (IPC)

G06N
G06F

The present search report has been drawn up for all claims

| Place of search | Date of completion of the search | Examiner |
|---|---|---|
| Berlin | 10 November 2022 | Schmidt, Axel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**REFERENCES CITED IN THE DESCRIPTION**

**Non-patent literature cited in the description**

- **YIN P. ; NEUBIG G. ; YIH W. ; RIEDEL S.** TABERT: Pretraining for Joint Understanding of Textual and Tabular Data. *ACL,* 2020